# EUROPEAN PATENT SPECIFICATION

(11) **EP 2 759 399 B1**
(45) Date of publication and mention of the grant of the patent: **13.05.2015**
(21) Application number: 13425018.2
(22) Date of filing: 28.01.2013
(51) Int. Cl.: B32B 3/24, B32B 3/14, B32B 5/12, B32B 15/12, B29C 70/88, B32B 15/14, B32B 15/18, B32B 15/20, B29C 70/08

(54) **Multilayer wall and method for forming said wall**
Mehrschichtige Wand und Verfahren zur Formung der besagten Wand
Paroi multicouche et procédé de formation de ladite description de paroi

(43) Date of publication of application: 30.07.2014
(73) Proprietor: GS4C S.r.L., 20135 Milano (IT)
(72) Inventor: Benco, Enrico, 20135 Milano (IT)
(74) Representative: Mozzi, Matteo

(56) References cited:
- WO-A1-2004/071761
- WO-A1-2006/123928
- WO-A1-2012/050450
- US-A- 5 547 735
- US-A1- 2005 175 813

## Description

The present invention relates to a multilayer wall and a method for forming said wall.

Multilayer walls exist consisting of alternate layers of metal material (such as aluminium, titanium, stainless steel) and fibrous material (such as glass fibre, carbon fibre). Such multilayer walls, also known by the acronym FML (from Fiber Metal Laminates), are typically used in the aeronautics and space industry in that they have superior characteristics compared to a metal material or fibrous material taken singly, such as a greater resistance to impact and to the propagation of fractures inside the multilayer wall, and an improved resistance to fatigue.

One of the most critical aspects in making an FML multilayer wall is certainly the junction between adjacent metal sheets constituting the metal layer.

For application in the space or aeronautics sphere, the junction between adjacent metal sheets is obtained using a method called splicing whereby the adjacent metal sheets are overlapped at the junction point with layers of fibrous material to achieve the continuity of the multilayer wall.

A multilayer wall thus obtained however has high formation costs and times given the formation technology and method used.

The purpose of the present invention is to excogitate and make available a multilayer wall which makes it possible to at least partially overcome the drawbacks mentioned above with reference to the prior art, in other words which presents a considerable reduction of junctions and reduced formation times and costs.

Such purpose is achieved by a multilayer wall according to claim 1.

The present invention also relates to a multilayer structure and a method for forming a multilayer wall.

Further characteristics and advantages of the multilayer wall and of the respective method for forming according to the invention will, in any case, be evident from the description given below of its preferred embodiments, made by way of a non-limiting example with reference to the appended drawings, wherein:
- figure 1 schematically illustrates an exploded perspective view of a multilayer wall according to one embodiment of the invention, and
- figure 2 schematically illustrates a lateral cross-section view of the multilayer wall in figure 1.

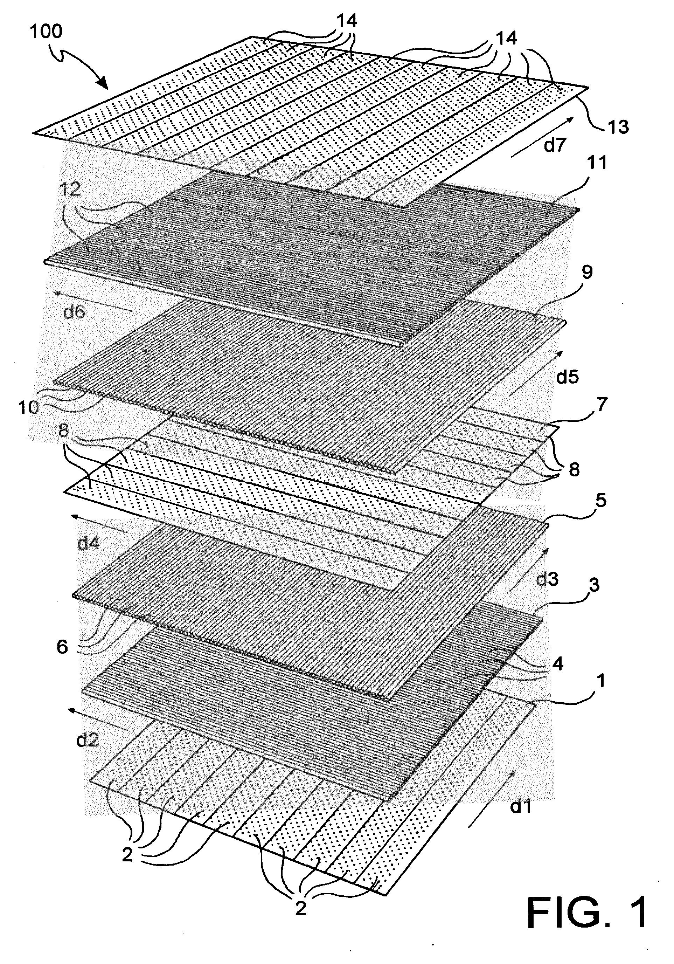

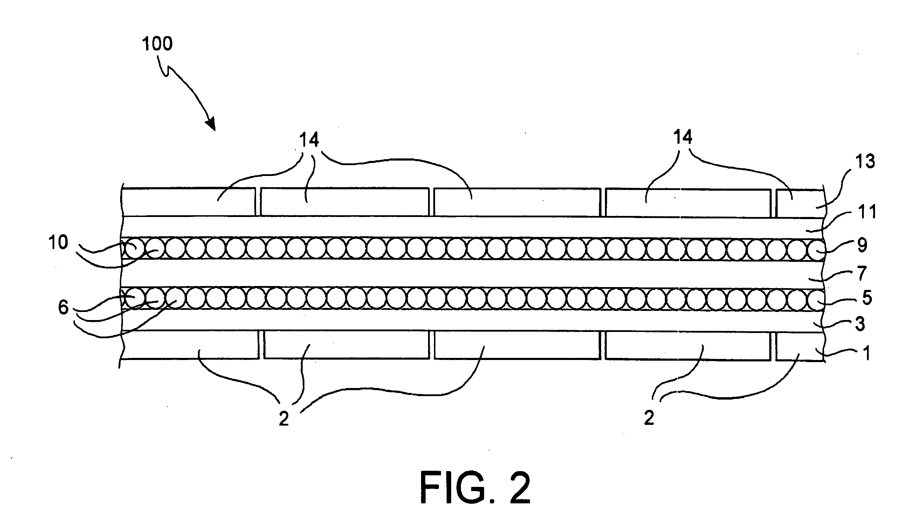

With reference to figures 1 and 2, a multilayer wall according to one embodiment of the invention will now be described.

The same or similar elements have been indicated in the drawings using the same reference numerals.

The multilayer wall, hereinafter also simply wall, is globally denoted by reference numeral 100.

The multilayer wall 100 may be used in the space or aeronautics sphere, for example but not limited to, making the fuselage, in the naval sphere, for example but not limited to, making hulls, and in general in the industrial sphere where particular characteristics of resistance, water tightness, and tightness are required, for example for making pipes, ducts, cylinders and so forth.

With reference again to figures 1 and 2, the wall 100 comprises at least one first layer 1 of metal material. Examples of metal material are aluminium, aluminium alloys, magnesium, steel, titanium alloys, metal matrix composite (MMC) sheets and so forth.

Such at least one first layer 1 of metal material comprises a first plurality of perforated sheets 2 in metal material substantially adjacent to one another.

The first plurality of perforated sheets 2 in metal material has a first longitudinal direction of extension d1.

Moreover, the first plurality of perforated sheets 2 in metal material has a thickness of at least 0.1 mm, preferably less than 0.8 mm.

With reference to the arrangement of the plurality of perforated sheets, in the embodiment illustrated in the figures, the first plurality of perforated sheets 2 are positioned adjacent to each other.

According to a further embodiment, the plurality of perforated sheets 1 in metal material are partially overlapped with each other, for example by a portion of perforated sheet corresponding at most to 20% of the perforated sheet.

It is to be noted moreover that the holes on each perforated sheet of the first plurality 2 advantageously permit the penetration of a resin used in the vacuum-assisted resin infusion process utilised in the manufacturing method of the wall 100. The dimension, quantity and distribution of the holes on each perforated sheet, for example aligned or not aligned with each other, depends on the design dispositions of the wall 100.

Returning to the embodiment in the drawings, the wall 100 further comprises at least one first layer 3 of fibrous material positioned on said at least one first layer 1 of metal material. Examples of fibrous material are fibre textiles of mineral, polymeric, synthetic and organic nature such as basalt and its derivatives, carbon, aramid, glass, linen, hemp and so forth.

Such at least one first layer 3 of fibrous material comprises a first plurality of fibres 4, preferably unidirectional, having a second direction of longitudinal extension d2.

The second direction of longitudinal extension d2 is inclined by a predefined first angle of inclination to the first direction of longitudinal extension d1.

In the embodiment in figures 1 and 2, the second direction of longitudinal extension d2 is inclined in relation to the first direction of longitudinal extension d1 by a predefined angle of inclination equal to, for example but not limited to, substantially 90°.

It is to be noted that such at least one first layer 3 of fibrous material may comprise a layer of textile preferably unidirectional or alternatively a plurality of ribbons of unidirectional fibre adjacent to each other. To such purpose, it is to be observed that, the distribution of the ribbons of fibre depends on the design dispositions of the wall 100, so as to obtain an advantageous distribution of the stresses along the longitudinal axis of each fibre.

The wall 100 further comprises at least one second layer 5 of fibrous material positioned on said at least one first layer 3 of fibrous material. As said above, examples of fibrous material are fibre textiles of mineral, polymeric, synthetic and organic nature such as basalt and its derivatives, carbon, aramid, glass, linen, hemp and so forth.

Such at least one second layer 5 of fibrous material comprises a second plurality of fibres 6, preferably unidirectional, having a third direction of longitudinal extension d3.

The third direction of longitudinal extension d3 is inclined by a predefined second angle of inclination in relation to the second direction of longitudinal extension d2.

In the embodiment in figures 1 and 2, the third direction of longitudinal extension d3 is inclined in relation to the second direction of longitudinal extension 3 by an angle equal to, for example but not limited to, substantially 90°.

It is to be observed that, such at least one second layer 3 of fibrous material may comprise a layer of unidirectional textile or alternatively, a plurality of ribbons of unidirectional fibre adjacent to each other.

The same considerations made above in relation to said at least one first layer of fibre 3 also apply to said at least one second layer 5 of fibrous material.

In fact, said at least one second layer 5 of fibrous material may comprise a layer of unidirectional textile or alternatively, a plurality of ribbons of unidirectional fibre adjacent to each other. To such purpose, it is to be observed that, the distribution of the ribbons of fibre depends on the design dispositions of the wall 100, so as to obtain an advantageous distribution of the stresses along the longitudinal axis of each fibre.

The wall 100 further comprises at least one second layer 7 of metal material positioned on said at least one second layer 5 of fibrous material. Examples of metal material are aluminium, aluminium alloys, magnesium, steel, titanium alloys, metal matrix composite (MMC) sheets and so forth.

Such at least one second layer 7 of metal material comprises a second plurality of perforated sheets 8 in metal material substantially adjacent to one another. The second plurality of perforated sheets 8 in metal material has a fourth direction of longitudinal extension d4.

The fourth direction of longitudinal extension d4 is inclined by a predefined third angle of inclination in relation to the first direction of longitudinal extension d1 and by a predefined fourth angle of inclination in relation to the third direction of longitudinal extension d3.

In one embodiment, the third angle of inclination of the fourth direction of longitudinal extension d4 in relation to the first direction of longitudinal extension d1 and the fourth angle of inclination of the fourth direction of longitudinal extension d4 have substantially the same amplitude, for example, equal to 90° (embodiment in figures 1 and 2).

According to another embodiment (not shown in the drawings), the third angle of inclination of the fourth direction of longitudinal extension d4 in relation to the first direction of longitudinal extension d1 and the fourth angle of inclination of the fourth direction of longitudinal extension d4 in relation to the third direction of longitudinal extension d3 have different amplitudes.

In addition, what has been described above for the at least one first layer 1 of metal material may also be repeated for such at least one second layer 7 of metal material.

In fact, the second plurality of perforated sheets 8 in metal material have a thickness of at least 0.1 mm, preferably less than 0.8mm.

Moreover, with reference to the arrangement of the plurality of perforated sheets, in the embodiment illustrated in the figures, the first plurality of perforated sheets 2 are positioned adjacent to each other.

According to a further embodiment, the plurality of perforated sheets 1 in metal material are partially overlapped with each other, for example by a portion of perforated sheet corresponding at most to 20% of the perforated sheet.

It is to be noted moreover that the holes on each perforated sheet of the second plurality 8 advantageously permit the penetration of a resin used in the vacuum-assisted resin infusion process utilised in the manufacturing method of the wall 100.

The dimension, quantity and distribution, for example aligned or not aligned with each other, of the holes on each perforated sheet depends on the design dispositions of the wall 100.

The wall 100 further comprises at least one third layer 9 of fibrous material positioned on said at least one second layer 7 of metal material. As said above, examples of fibrous material are fibre textiles of mineral, polymeric, synthetic and organic nature such as basalt and its derivatives, carbon, aramid, glass, linen, hemp and so forth.

Such at least one third layer 9 of fibrous material comprises a third plurality of fibres 10, preferably unidirectional, having a fifth direction of longitudinal extension d5.

The fifth direction of longitudinal extension d5 is inclined by a predefined fifth angle of inclination in relation to the fourth direction of longitudinal extension d4.

In the embodiment in figures 1 and 2, the fifth direction of longitudinal extension d5 is inclined in relation to the fourth direction of longitudinal extension d4 by an angle equal to, for example but not limited to, substantially 90°.

It is to be noted that the same considerations made above in relation to said at least one first layer of fibrous material 3 also apply to said at least one third layer 9 of fibrous material.

In fact, said at least one third layer 9 of fibrous material may comprise a layer of unidirectional textile or alternatively, a plurality of ribbons of unidirectional fibre adjacent to each other. To such purpose, it is to be observed that, the distribution of the ribbons of fibre depends on the design dispositions of the wall 100, so as to obtain an advantageous distribution of the stresses along the longitudinal axis of each fibre.

The wall 100 further comprises at least one fourth layer 11 of fibrous material positioned on said at least one third layer 9 of fibrous material. As said above, examples of fibrous material are fibre textiles of mineral, polymeric, synthetic and organic nature such as basalt and its derivatives, carbon, aramid, glass, linen, hemp and so forth.

Such at least one fourth layer 11 of fibrous material comprises a fourth plurality of fibres 12, preferably unidirectional, having a sixth direction of longitudinal extension d6.

The sixth direction of longitudinal extension d6 is inclined by a predefined sixth angle of inclination in relation to the fifth direction of longitudinal extension d5.

In the embodiment in figures 1 and 2, the sixth direction of longitudinal extension d6 is inclined in relation to the fifth direction of longitudinal extension d5 by an angle equal to, for example but not limited to, substantially 90°.

It is to be observed that, the same considerations made above in relation to said at least one first layer of fibrous material 3 also apply to said at least one fourth layer 11 of fibrous material.

In fact, said at least one fourth layer 11 of fibrous material may comprise a layer of unidirectional textile or alternatively, a plurality of ribbons of unidirectional fibre adjacent to each other. To such purpose, it is to be observed that, the distribution of the ribbons of fibre depends on the design dispositions of the wall 100, so as to obtain an advantageous distribution of the stresses along the longitudinal axis of each fibre.

The wall 100 further comprises at least one third layer 13 of metal material positioned on said at least one fourth layer 11 of fibrous material. Examples of metal material are aluminium, aluminium alloys, magnesium, steel, titanium alloys, metal matrix composite (MMC) sheets and so forth.

Such at least one third layer 13 of metal material comprises a third plurality of perforated sheets 14 in metal material substantially adjacent to one another. The third plurality of perforated sheets 14 in metal material has a seventh longitudinal direction of extension d7.

The seventh direction of longitudinal extension d7 is inclined by a predefined seventh angle of inclination in relation to the fourth direction of longitudinal extension d4 and by a predefined eighth angle of inclination in relation to the sixth direction of longitudinal extension d6.

In one embodiment, the seventh angle of inclination of the seventh direction of longitudinal extension d7 in relation to the fourth direction of longitudinal extension d4 and the eighth angle of inclination of the seventh direction of longitudinal extension d7 in relation to the sixth direction of longitudinal extension d6 have substantially the same amplitude, for example equal to 90° (the embodiment in figures 1 and 2).

According to another embodiment (not shown in the drawings), the seventh angle of inclination of the seventh direction of longitudinal extension d7 in relation to the fourth direction of longitudinal extension d4 and the eighth angle of inclination of the seventh direction of longitudinal extension d7 in relation to the sixth direction of longitudinal extension d6 have different amplitudes.

In addition, what has been described above for the at least one first layer 1 of metal material may also be repeated for such at least one third layer 13 of metal material.

In fact, the third plurality of perforated sheets 14 in metal material have a thickness of at least 0.1 mm, preferably less than 0.8 mm.

Moreover, with reference to the arrangement of the plurality of perforated sheets, in the embodiment illustrated in the figures, the third plurality of perforated sheets 8 are positioned adjacent to each other.

According to a further embodiment, the plurality of perforated sheets 14 in metal material are partially overlapped with each other, for example by a portion of perforated sheet corresponding at most to 20% of the perforated sheet.

It is to be noted moreover that the holes on each perforated sheet of the third plurality 14 advantageously permit the penetration of a resin used in the vacuum-assisted resin infusion process utilised in the manufacturing method of the wall 100.

The dimension, quantity and distribution, for example aligned or not aligned with each other, of the holes on each perforated sheet depends on the design dispositions of the wall 100.

According to other embodiments (not shown in the drawings), the multilayer wall 100 may comprise further layers of fibrous material and layers of metal material, positioned starting from the third layer 13 of metal material, positioned in relation to one another in an entirely similar way to that described above with reference to the embodiment in figures 1 and 2.

According to a further embodiment, in the minimum configuration, the multilayer wall 100 comprises at least the first layer 1 of metal material, at least the first layer 3 of fibrous material, at least the second layer 5 of fibrous material and at least the second layer 7 of metal material, already described above.

The present invention also relates to a multilayer structure (not shown in the drawings) comprising at least one first multilayer wall and at least one second multilayer wall, entirely similar to that described above with reference to the different embodiments of the multilayer wall 100, and a structural core, for example of synthetic foam material or metal or cores of natural origin such as cork, of a honeycomb structure of natural, synthetic or metal material (such as aluminium), interposed between said at least one first multilayer wall and said at least one second multilayer wall.

The structural core may have a variable thickness, for example from a few millimetres to several centimetres, depending on the mechanical characteristics provided for in the design dispositions of the multilayer structure.

Returning in general to the multilayer wall 100, according to any of the embodiments described above, it is to be noted that the number, thickness and angle of inclination of the layers of metal material and of the layers of fibrous material depend on the mechanical characteristics required, at the design stage, of the multilayer wall, on the shape (for example curvature) of the multilayer wall and so forth.

It is to be noted that the multilayer wall 100 according to the present invention advantageously presents a high degree of uniformity in which the presence of critical zones (junctions) is greatly reduced with a consequent reduction of construction costs and times.

This is due to the fact that the plurality of perforated sheets of subsequent metal layers (for example the first layer 1 of metal material and the second layer 7 of metal material, or the second layer of metal material 7 and the third layer of metal material 13) have respective directions of longitudinal extension inclined to each other. This way the junctions between the perforated sheets of one metal layer are prevented from coinciding with the junctions between the perforated sheets of a subsequent metal layer. On the contrary, the reciprocal inclination between the joints gives a greater strength to the multilayer wall.

With reference again to figures 1 and 2, it is now described a method for forming a multilayer wall 100, hereinafter also referred to as method, according to one embodiment of the present invention.

The method comprises a step of depositing at least one first layer 1 of metal material on a three-dimensional model or mould. The at least one first layer 1 of material comprises a first plurality of perforated sheets 2 in metal material substantially adjacent to one another, having a first direction of longitudinal extension d1.

The step of depositing at least the first layer 1 of metal material may comprise, in one embodiment, a step of drawing the first plurality of perforated sheets 2 towards one another, or, in a further embodiment, a step of overlapping the first plurality 2 of perforated sheets one on top of the other by a portion of perforated sheet corresponding at most to 20% of the surface of the perforated sheet.

The method further comprises a step of depositing on said at least one first layer 1 of metal material at least one first layer 3 of fibrous material. Such at least one first layer 3 of fibrous material comprises a first plurality of fibres 4, preferably unidirectional, having a second direction of longitudinal extension d2. The step of depositing said at least one first layer 3 of fibrous material comprises a step of directing the first plurality of fibres 4 in such a way that the second direction of longitudinal extension d2 is inclined by a predefined first angle of inclination in relation to the first direction of longitudinal extension d1.

The method further comprises a step of depositing on said at least one first layer 3 of fibrous material at least one second layer 5 of material. Such at least one second layer 5 of fibrous material comprises a second plurality of fibres 6, preferably unidirectional, having a third direction of longitudinal extension d3. The step of depositing at least one second layer 5 of fibrous material comprises the step of directing the second plurality of fibres 6 in such a way that the third direction of longitudinal extension d3 is inclined by a predefined second angle of inclination in relation to the second direction of longitudinal extension d2.

The method further comprises a step of depositing on said at least one second layer 5 of fibrous material at least one second layer 7 of metal material. Such at least one second layer 7 of metal material comprises a second plurality of perforated sheets 8 in metal material substantially adjacent to one another. The second plurality of perforated sheets 8 in metal material has a fourth longitudinal direction of extension d4. The step of depositing at least one second layer 7 of metal material comprises a step of directing the second plurality of perforated sheets 8 in metal material in such a way that the fourth direction of longitudinal extension d4 is inclined by a predefined third angle of inclination in relation to the first direction of longitudinal extension d1 and by a predefined fourth angle of inclination in relation to the third direction of longitudinal extension d3.

The step of depositing at least the second layer 7 of metal material may further comprise, in one embodiment, a step of drawing the second plurality of perforated sheets 8 in metal material towards one another, or, in a further embodiment, a step of overlapping the second plurality 8 of perforated sheets in metal material one on top of the other by a portion of perforated sheet corresponding at most to 20% of the surface of the perforated sheet.

The method further comprises a step of depositing on said at least second layer 7 of metal material at least one third layer 9 of fibrous material. Such at least one third layer 9 of fibrous material comprises a third plurality of fibres 10, preferably unidirectional, having a fifth direction of longitudinal extension d5. The step of depositing at least one third layer 9 of fibrous material comprises the step of directing the third plurality of fibres 10 in such a way that the fifth direction of longitudinal extension d5 is inclined by a predefined fifth angle of inclination in relation to the fourth direction of longitudinal extension d4.

The method for forming further comprises a step of depositing on said at least one third layer 9 of fibrous material at least one fourth layer 11 of fibrous material. Such at least one fourth layer 11 of fibrous material comprises a fourth plurality of fibres 12, preferably unidirectional, having a sixth direction of longitudinal extension d6. The step of depositing at least one fourth layer 11 of fibrous material comprises a step of directing the fourth plurality of fibres 12 in such a way that the sixth direction of longitudinal extension d6 is inclined by a predefined sixth angle of inclination in relation to the fifth direction of longitudinal extension d5.

The method further comprises a step of depositing on said at least one fourth layer 11 of fibrous material at least one third layer 13 of metal material. Such at least one third layer 13 of metal material comprises a third plurality of perforated sheets 14 in metal material substantially adjacent to one another. The third plurality of perforated sheets 14 in metal material has a seventh longitudinal direction of extension d7. The step of depositing at least one third layer 7 of metal material comprises the step of directing the third plurality of perforated sheets 14 in such a way that the seventh direction of longitudinal extension d7 is inclined by a predefined seventh angle of inclination in relation to the fourth direction of longitudinal extension d4 and by a predefined eighth angle of inclination in relation to the sixth direction of longitudinal extension d6.

The step of depositing at least the third layer 13 of metal material may further comprise, in one embodiment, a step of drawing the third plurality of perforated sheets 14 in metal material towards one another, or, in a further embodiment, a step of overlapping the third plurality 14 of perforated sheets in metal material one on top of the other by a portion of perforated sheet corresponding at most to 20% of the surface of the perforated sheet.

The method for forming comprises an infusion step, on each of the aforesaid first, second and third layers (and any further layers depending on the mechanical/structural requirements of the wall) of metal material and of the adjacent first, second third and fourth layer of fibrous material (and any further layers depending on the mechanical/structural requirements of the wall), of vacuum assisted resin.

It is to be noted that the infusion step may be performed at the end of the construction of the layers of the wall or, alternatively, from time to time, during the construction of the wall, on each metal layer/fibrous material layer pair.

In addition, the method for forming comprises one or more steps of baking at a first temperature depending on the type of resin used, for example epoxy resin, polyurethane resin, vinyl resin and so on.

Subsequently the method for forming comprises a post-baking step at a second temperature depending on the type of resin used.

It is to be noted that in the method for forming, according to other embodiments (not shown in the drawings), further steps of depositing layers of metal material and layers of fibrous material may be planned, entirely similar to those described above. This depends on the requirements and applications which the multilayer wall obtained is intended for.

It is to be noted that the presence of layers of metal material comprising a plurality of perforated sheets adjacent to each other advantageously permits the deposit of such layers even on models or three-dimensional mediums with one or more curvatures without having to resort to the pre-forming of the layers in metal material.

This obviously entails a reduction both of the times and costs of forming a multilayer wall.

Moreover, the method for forming according to the invention makes it possible to manufacture multilayer walls of complex shapes (for example with several curves) with a reduced presence of structural critical zones (junctions) achievable with times and costs in any case still limited.

A person skilled in the art may make modifications and adaptations to the embodiments of the multilayer wall and relative method for forming described above, replacing elements with others functionally equivalent, so as to satisfy contingent requirements while remaining within the scope of protection of the following claims. Each of the characteristics described as belonging to a possible embodiment may be realised independently of the other embodiments described.

## Claims

1. Multilayer wall (100) comprising:
- at least one first layer (1) of metal material comprising a first plurality of perforated sheets (2) in metal material substantially adjacent to one another, said first plurality of perforated sheets (2) in metal material having a first direction of longitudinal extension (d1);
- at least one first layer (3) of fibrous material positioned on said at least one first layer (1) of metal material, said at least one first layer (3) of fibrous material comprising a first plurality of fibres (4) having a second direction of longitudinal extension (d2), the second direction of longitudinal extension (d2) is inclined by a predefined first angle of inclination to the first direction of longitudinal extension (d1);
- at least one second layer (5) of fibrous material positioned on said at least one first layer (3) of fibrous material, said at least one second layer (5) of fibrous material comprising a second plurality of fibres (6) having a third direction of longitudinal extension (d3), the third direction of longitudinal extension (d3) being inclined by a predefined second angle of inclination in relation to the second direction of longitudinal extension (d2);
- at least one second layer (7) of metal material positioned on said at least one second layer (5) of fibrous material, said at least one second layer (7) of metal material comprising a second plurality of perforated sheets (8) in metal material substantially adjacent to one another, the second plurality of perforated sheets (8) in metal material having a fourth direction of longitudinal extension (d4), the fourth direction of longitudinal extension (d4) being inclined by a predefined third angle of inclination in relation to the first direction of longitudinal extension (d1) and by a predefined fourth angle of inclination in relation to the third direction of longitudinal extension (d3).

2. Multilayer wall (100) according to claim 1, wherein the third angle of inclination of the fourth direction of longitudinal extension (d4) in relation to the first direction of longitudinal extension (d1) and the fourth angle of inclination of the fourth direction of longitudinal extension (d4) have substantially the same amplitude.

3. Multilayer wall (100) according to claim 1, wherein the third angle of inclination of the fourth direction of longitudinal extension (d4) in relation to the first direction of longitudinal extension (d1) and the fourth angle of inclination of the fourth direction of longitudinal extension (d4) in relation to the third direction of longitudinal extension (d3) have different amplitudes.

4. Multilayer wall (100) according to any of the previous claims, further comprising at least one third layer (9) of fibrous material positioned on said at least one second layer (7) of metal material, said at least one third layer (9) of fibrous material comprising a third plurality of fibres (10) having a fifth direction of longitudinal extension (d5), the fifth direction of longitudinal extension (d5) being inclined by a predefined fifth angle of inclination in relation to the fourth direction of longitudinal extension (d4).

5. Multilayer wall (100) according to claim 4, further comprising at least one fourth layer (11) of fibrous material positioned on said at least one third layer (9) of fibrous material, said at least one fourth layer (11) of fibrous material comprising a fourth plurality of fibres (12) having a sixth direction of longitudinal extension (d6), the sixth direction of longitudinal extension (d6) being inclined by a predefined sixth angle of inclination in relation to the fifth direction of longitudinal extension (d5).

6. Multilayer wall (100) according to claim 5, further comprising at least one third layer (13) of metal material positioned on said at least one fourth layer (11) of fibrous material, said at least one third layer (13) of metal material comprising a third plurality of perforated sheets (14) in metal material substantially adjacent to one another, the third plurality of perforated sheets (14) in metal material having a seventh direction of longitudinal extension (d7), the seventh direction of longitudinal extension (d7) being inclined by a predefined seventh angle of inclination in relation to the fourth direction of longitudinal extension (d4) and by a predefined eighth angle of inclination in relation to the sixth direction of longitudinal extension (d6).

7. Multilayer wall (100) according to claim 6, wherein the seventh angle of inclination of the seventh direction of longitudinal extension (d7) in relation to the fourth direction of longitudinal extension (d4) and the eighth angle of inclination of the seventh direction of longitudinal extension (d7) in relation to the sixth direction of longitudinal extension (d6) have substantially the same amplitude.

8. Multilayer wall (100) according to claim 6, wherein the seventh angle of inclination of the seventh direction of longitudinal extension (d7) in relation to the fourth direction of longitudinal extension (d4) and the eighth angle of inclination of the seventh direction of longitudinal extension (d7) in relation to the sixth direction of longitudinal extension (d6) have different amplitudes.

9. Multilayer wall (100) according to claim 1, wherein:
- the first plurality of perforated sheets (2) are positioned adjacent to each other;
- the second plurality of perforated sheets (8) are positioned adjacent to each other.

10. Multilayer wall (100) according to claim 1, wherein:
- the first plurality of perforated sheets (2) are overlapped with each other;
- the second plurality of perforated sheets (8) are partially overlapped with each other.

11. Multilayer wall (100) according to claim 6, wherein the third plurality of perforated sheets (14) are positioned adjacent to each other.

12. Multilayer wall (100) according to claim 6, wherein the third plurality of perforated sheets (14) are partially overlapped with each other.

13. Multilayer structure comprising:
- at least one first multilayer wall according to any of the previous claims;
- at least one second multilayer wall according to any of the previous claims;
- a structural core positioned between said at least one first multilayer wall and said at least one second multilayer wall.

14. Method for forming a multilayer wall (100) comprising the steps of:
- depositing at least one first layer (1) of metal material on a three-dimensional model, said at least one first layer (1) of metal material comprising a first plurality of perforated sheets (2) in metal material substantially adjacent to one another, having a first direction of longitudinal extension (d1);
- depositing on said at least one first layer (1) of metal material at least one first layer (3) of fibrous material, said at least one first layer (3) of fibrous material comprising a first plurality of fibres (4) having a second direction of longitudinal extension (d2), the step of depositing said at least one first layer (3) of fibrous material comprising a step of directing the first plurality of fibres (4) in such a way that the second direction of longitudinal extension (d2) is inclined by a predefined first angle of inclination in relation to the first direction of longitudinal extension (d1);
- depositing on said at least one first layer (3) of fibrous material at least one second layer (5) of material, said at least one second layer (5) of fibrous material comprising a second plurality of fibres (6) having a third direction of longitudinal extension (d3), the step of depositing at least one second layer (5) of fibrous material comprising the step of directing the second plurality of fibres (6) in such a way that the third direction of longitudinal extension (d3) is inclined by a predefined second angle of inclination in relation to the second direction of longitudinal extension (d2);
- depositing on said at least one second layer (5) of fibrous material at least one second layer (7) of metal material, said at least one second layer (7) of metal material comprising a second plurality of perforated sheets (8) in metal material substantially adjacent to one another, the second plurality of perforated sheets (8) in metal material having a fourth direction of longitudinal extension (d4), the step of depositing at least one second layer (7) of metal material comprising a step of directing the second plurality of perforated sheets (8) in metal material in such a way that the fourth direction of longitudinal extension (d4) is inclined by a predefined third angle of inclination in relation to the first direction of longitudinal extension (d1) and by a predefined fourth angle of inclination in relation to the third direction of longitudinal extension (d3).

15. Method for forming according to claim 14, further comprising the steps of:
- depositing on said at least one second layer (7) of metal material at least one third layer (9) of fibrous material, said at least one third layer (9) of fibrous material comprising a third plurality of fibres (10) having a fifth direction of longitudinal extension (d5), the step of depositing at least one third layer (9) of fibrous material comprising the step of directing the third plurality of fibres (10) in such a way that the fifth direction of longitudinal extension (d5) is inclined by a predefined fifth angle of inclination in relation to the fourth direction of longitudinal extension (d4);
- depositing on said at least one third layer (9) of fibrous material at least one fourth layer (11) of fibrous material, said at least one fourth layer (11) of fibrous material comprising a fourth plurality of fibres (12) having a sixth direction of longitudinal extension (d6), the step of depositing at least one fourth layer (11) of fibrous material comprising a step of directing the fourth plurality of fibres (12) in such a way that the sixth direction of longitudinal extension (d6) is inclined by a predefined sixth angle of inclination in relation to the fifth direction of longitudinal extension (d5);
- depositing on said at least one fourth layer (11) of fibrous material at least one third layer (13) of metal material, said at least one third layer (13) of metal material comprising a third plurality of perforated sheets (14) in metal material substantially adjacent to one another, the third plurality of perforated sheets (14) in metal material having a seventh direction of longitudinal extension (d7), the step of depositing at least one third layer (7) of metal material comprising the step of directing the third plurality of perforated sheets (14) in metal material in such a way that the seventh direction of longitudinal extension (d7) is inclined by a predefined seventh angle of inclination in relation to the fourth direction of longitudinal extension (d4) and by a predefined eighth angle of inclination in relation to the sixth direction of longitudinal extension (d6).

## Patentansprüche

1. Mehrlagenwand (100) umfassend:
- mindestens eine erste Lage (1) eines metallischen Materials umfassend eine erste Mehrzahl von perforierten Platten (2) aus metallischem Material im Wesentlichen benachbart zueinander, wobei die erste Mehrzahl von perforierten Platten (2) aus metallischem Material eine erste Längsausdehnungsrichtung (d1) aufweist
- mindestens eine erste Lage (3) eines faserförmigen Materials, die auf der mindestens einen ersten Lage (1) eines metallischen Materials positioniert ist, wobei die mindestens eine erste Lage (3) eines faserförmigen Materials eine erste Mehrzahl von Fasern (4) umfasst, die eine zweite Längsausdehnungsrichtung (d2) aufweist, wobei die zweite Längsausdehnungsrichtung (d2) um einen vorgegebenen ersten Neigungswinkel zu der ersten Längsausdehnungsrichtung (d1) geneigt ist
- mindestens eine zweite Lage (5) eines faserförmigen Materials, die auf der mindestens einen ersten Lage (3) eines faserförmigen Materials positioniert ist, wobei die mindestens eine zweite Lage (5) eines faserförmigen Materials eine zweite Mehrzahl von Fasern (6) umfasst, die eine dritte Längsausdehnungsrichtung (d3) aufweist, wobei die dritte Längsausdehnungsrichtung (d3) um einen vorgegebenen zweiten Neigungswinkel in Bezug auf die zweite Längsausdehnungsrichtung (d2) geneigt ist
- mindestens eine zweite Lage (7) eines metallischen Materials, die auf der mindestens einen zweiten Lage (5) eines faserförmigen Materials positioniert ist, wobei die mindestens eine zweite Lage (7) eines metallischen Materials eine zweite Mehrzahl von perforierten Platten (8) aus metallischem Material im Wesentlichen benachbart zueinander umfasst, wobei die zweite Mehrzahl von perforierten Platten (8) aus metallischem Material eine vierte Längsausdehnungsrichtung (d4) aufweist, wobei die vierte Längsausdehnungsrichtung (d4) um einen vorgegebenen dritten Neigungswinkel in Bezug auf die erste Längsausdehnungsrichtung (d1) und um einen vorgegebenen vierten Neigungswinkel in Bezug auf die dritte Längsausdehnungsrichtung (d3) geneigt ist.

2. Mehrlagenwand (100) nach Anspruch 1, wobei der dritte Neigungswinkel der vierten Längsausdehnungsrichtung (d4) in Bezug auf die erste Längsausdehnungsrichtung (d1) und der vierte Neigungswinkel der vierten Längsausdehnungsrichtung (d4) im Wesentlichen dieselbe Größe aufweisen.

3. Mehrlagenwand (100) nach Anspruch 1, wobei der dritte Neigungswinkel der vierten Längsausdehnungsrichtung (d4) in Bezug auf die erste Längsausdehnungsrichtung (d1) und der vierte Neigungswinkel der vierten Längsausdehnungsrichtung (d4) in Bezug auf die dritte Längsausdehnungsrichtung (d3) verschiedene Größen aufweisen.

4. Mehrlagenwand (100) nach einem der vorgehenden Ansprüche, weiter umfassend mindestens eine dritte Lage (9) eines faserförmigen Materials, die auf der mindestens einen zweiten Lage (7) eines metallischen Materials positioniert ist, wobei die mindestens eine dritte Lage (9) eines faserförmigen Materials eine dritte Mehrzahl von Fasern (10) umfasst, die eine fünfte Längsausdehnungsrichtung (d5) aufweist, wobei die fünfte Längsausdehnungsrichtung (d5) um einen vorgegebenen fünften Neigungswinkel in Bezug auf die vierte Längsausdehnungsrichtung (d4) geneigt ist.

5. Mehrlagenwand (100) nach Anspruch 4, weiter umfassend mindestens eine vierte Lage (11) eines faserförmigen Materials, die auf der mindestens einen dritten Lage (9) eines faserförmigen Materials positioniert ist, wobei die mindestens eine vierte Lage (11) eines faserförmigen Materials eine vierte Mehrzahl von Fasern (12) umfasst, die eine sechste Längsausdehnungsrichtung (d6) aufweist, wobei die sechste Längsausdehnungsrichtung (d6) um einen vorgegebenen sechsten Neigungswinkel in Bezug auf die fünfte Längsausdehnungsrichtung (d5) geneigt ist.

6. Mehrlagenwand (100) nach Anspruch 5, weiter umfassend mindestens eine dritte Lage (13) eines metallischen Materials, die auf der mindestens einen vierten Lage (11) eines faserförmigen Materials positioniert ist, wobei die mindestens eine dritte Lage (13) eines metallischen Materials eine dritte Mehrzahl von perforierten Platten (14) aus metallischem Material im Wesentlichen benachbart zueinander umfasst, wobei die dritte Mehrzahl von perforierten Platten (14) aus metallischem Material eine siebte Längsausdehnungsrichtung (d7) aufweist, wobei die siebte Längsausdehnungsrichtung (d7) um einen vorgegebenen siebten Neigungswinkel in Bezug auf die vierte Längsausdehnungsrichtung (d4) und um einen vorgegebenen achten Neigungswinkel in Bezug auf die sechste Längsausdehnungsrichtung (d6) geneigt ist.

7. Mehrlagenwand (100) nach Anspruch 6, wobei der siebte Neigungswinkel der siebten Längsausdehnungsrichtung (d7) in Bezug auf die vierte Längsausdehnungsrichtung (d4) und der achte Neigungswinkel der siebten Längsausdehnungsrichtung (d7) in Bezug auf die sechste Längsausdehnungsrichtung (d6) im Wesentlichen dieselbe Größe aufweisen.

8. Mehrlagenwand (100) nach Anspruch 6, wobei der siebte Neigungswinkel der siebten Längsausdehnungsrichtung (d7) in Bezug auf die vierte Längsausdehnungsrichtung (d4) und der achte Neigungswinkel der siebten Längsausdehnungsrichtung (d7) in Bezug auf die sechste Längsausdehnungsrichtung (d6) verschiedene Größen aufweisen.

9. Mehrlagenwand (100) nach Anspruch 1, wobei:
- die erste Mehrzahl von perforierten Platten (2) benachbart zueinander positioniert sind
- die zweite Mehrzahl von perforierten Platten (8) benachbart zueinander positioniert sind.

10. Mehrlagenwand (100) nach Anspruch 1, wobei
- die erste Mehrzahl von perforierten Platten (2) miteinander überlappt sind
- die zweite Mehrzahl von perforierten Platten (8) teilweise miteinander überlappt sind.

11. Mehrlagenwand (100) nach Anspruch 6, wobei die dritte Mehrzahl von perforierten Platten (14) benachbart zueinander angeordnet sind.

12. Mehrlagenwand (100) nach Anspruch 6, wobei die dritte Mehrzahl von perforierten Platten (14) teilweise miteinander überlappt sind.

13. Mehrlagenstruktur umfassend:
- mindestens eine erste Mehrlagenwand nach einem der vorhergehenden Ansprüche
- mindestens eine zweite Mehrlagenwand nach einem der vorhergehenden Ansprüche
- einen strukturellen Kern, der zwischen der mindestens einen ersten Mehrlagenwand und der mindestens einen zweiten Mehrlagenwand positioniert ist.

14. Verfahren zum Bilden einer Mehrlagenwand (100) umfassend die Schritte von:
- aufbringen mindestens einer ersten Lage (1) eines metallischen Materials auf ein dreidimensionales Modell, wobei die mindestens eine erste Lage (1) eines metallischen Materials eine erste Mehrzahl von perforierten Platten (2) aus metallischem Material im Wesentlichen benachbart zueinander umfasst, die eine erste Längsausdehnungsrichtung (d1) aufweist
- aufbringen mindestens einer ersten Lage (3) eines faserförmigen Materials auf die mindestens eine erste Lage (1) eines metallischen Materials, wobei die mindestens eine erste Lage (3) eines faserförmigen Materials eine erste Mehrzahl von Fasern (4) umfasst, die eine zweite Längsausdehnungsrichtung (d2) aufweist, wobei der Schritt des Aufbringens der mindestens einen ersten Lage (3) eines faserförmigen Materials einen Schritt des Ausrichtens der ersten Mehrzahl von Fasern (4) derart umfasst, dass die zweite Längsausdehnungsrichtung (d2) um einen vorgegebenen ersten Neigungswinkel in Bezug auf die erste Längsausdehnungsrichtung (d1) geneigt ist
- aufbringen mindestens einer zweiten Lage (5) eines Materials auf die mindestens eine erste Lage (3) eines faserförmigen Materials, wobei die mindestens eine zweite Lage (5) eines faserförmigen Materials eine zweite Mehrzahl von Fasern (6) umfasst, die eine dritte Längsausdehnungsrichtung (d3) aufweist, wobei der Schritt des Aufbringens mindestens einer zweiten Lage (5) eines faserförmigen Materials den Schritt des Ausrichtens der zweiten Mehrzahl von Fasern (6) derart umfasst, dass die dritte Längsausdehnungsrichtung (d3) um einen vorgegebenen zweiten Neigungswinkel in Bezug auf die zweite Längsausdehnungsrichtung (d2) geneigt ist
- aufbringen mindestens einer zweiten Lage (7) eines metallischen Materials auf die mindestens eine zweite Lage (5) eines faserförmigen Materials, wobei die mindestens eine zweite Lage (7) eines metallischen Materials eine zweite Mehrzahl von perforierten Platten (8) aus metallischem Material im Wesentlichen benachbart zueinander umfasst, wobei die zweite Mehrzahl von perforierten Platten (8) aus metallischem Material eine vierte Längsausdehnungsrichtung (d4) aufweist, wobei der Schritt des Aufbringens mindestens einer zweiten Lage (7) aus metallischem Material einen Schritt des Ausrichtens der zweiten Mehrzahl von perforierten Platten (8) aus metallischem Material derart umfasst, dass die vierte Längsausdehnungsrichtung (d4) um einen vorgegebenen dritten Neigungswinkel in Bezug auf die erste Längsausdehnungsrichtung (d1) und durch einen vorgegebenen vierten Neigungswinkel in Bezug auf die dritte Längsausdehnungsrichtung (d3) geneigt ist.

15. Verfahren zum Bilden nach Anspruch 14, weiter umfassend die Schritte von:
- aufbringen mindestens einer dritten Lage (9) eines faserförmigen Materials auf die mindestens eine zweite Lage (7) eines metallischen Materials, wobei die mindestens eine dritte Lage (9) eines faserförmigen Materials eine dritte Mehrzahl von Fasern (10) umfasst, die eine fünfte Längsausdehnungsrichtung (d5) aufweist, wobei der Schritt des Aufbringens mindestens einer dritten Lage (9) eines faserförmigen Materials den Schritt des Ausrichtens der dritten Mehrzahl von Fasern (10) derart umfasst, dass die fünfte Längsausdehnungsrichtung (d5) um einen vorgegebenen fünften Neigungswinkel in Bezug auf die vierte Längsausdehnungsrichtung (d4) geneigt ist
- aufbringen mindestens einer vierten Lage (11) eines faserförmigen Materials auf die mindestens eine dritte Lage (9) eines faserförmigen Materials, wobei die mindestens eine vierte Lage (11) eines faserförmigen Materials eine vierte Mehrzahl von Fasern (12) umfasst, die eine sechste Längsausdehnungsrichtung (d6) aufweist, wobei der Schritt des Aufbringens mindestens einer vierten Lage (11) eines faserförmigen Materials einen Schritt des Ausrichtens der vierten Mehrzahl von Fasern (12) derart umfasst, dass die sechste Längsausdehnungsrichtung (d6) um einen vorgegebenen sechsten Neigungswinkel in Bezug auf die fünfte Längsausdehnungsrichtung (d5) geneigt ist
- aufbringen mindestens einer dritte Lage (13) eines metallischen Materials auf die mindestens eine vierte Lage (11) eines faserförmigen Materials, wobei die mindestens eine dritte Lage (13) eines metallischen Materials eine dritte Mehrzahl von perforierten Platten (14) aus metallischem Material im Wesentlichen benachbart zueinander umfasst, wobei die dritte Mehrzahl von perforierten Platten (14) aus metallischem Material eine siebte Längsausdehnungsrichtung (d7) aufweist, wobei der Schritt des Aufbringens mindestens einer dritten Lage (7) eines metallischen Materials den Schritt des Ausrichtens der dritten Mehrzahl von perforierten Platten (14) aus metallischem Material derart umfasst, dass die siebte Längsausdehnungsrichtung (d7) um einen vorgegebenen siebten Neigungswinkel in Bezug auf die vierte Längsausdehnungsrichtung (d4) und um einen vorgegebenen achten Neigungswinkel in Bezug auf die sechste Längsausdehnungsrichtung (d6) geneigt ist.

## Revendications

1. Paroi multicouches (100) comprenant :
- au moins une première couche (1) de matériau métallique comprenant un premier ensemble de tôles perforées (2) métalliques sensiblement les unes à côté des autres, ledit premier ensemble de tôles perforées (2) métalliques ayant une première direction d'extension longitudinale (d1) ;
- au moins une première couche (3) de matériau fibreux positionnée sur au moins ladite première couche (1) de matériau métallique, cette au moins première couche (3) de matériau fibreux comprenant un premier ensemble de fibres (4) ayant une deuxième direction d'extension longitudinale (d2), cette deuxième direction d'extension longitudinale (d2) étant inclinée d'un premier angle d'inclinaison prédéfini par rapport à la première direction d'extension longitudinale (d1) ;
- au moins une deuxième couche (5) de matériau fibreux positionnée sur au moins ladite première couche (3) de matériau fibreux, cette au moins deuxième couche (5) de matériau fibreux comprenant un deuxième ensemble de fibres (6) ayant une troisième direction d'extension longitudinale (d3), cette troisième direction d'extension longitudinale (d3) étant inclinée d'un deuxième angle d'inclinaison prédéfini par rapport à la deuxième direction d'extension longitudinale (d2) ;
- au moins une deuxième couche (7) de matériau métallique positionnée sur au moins ladite deuxième couche (5) de matériau fibreux, cette deuxième couche (7) de matériau métallique comprenant un deuxième ensemble de tôles perforées (8) métalliques sensiblement les unes à côté des autres, le deuxième ensemble de tôles perforées (8) métalliques ayant une quatrième direction d'extension longitudinale (d4), la quatrième direction d'extension longitudinale (d4) étant inclinée d'un troisième angle d'inclinaison prédéfini par rapport à la première direction d'extension longitudinale (d1) et d'un quatrième angle d'inclinaison prédéfini par rapport à la troisième direction d'extension longitudinale (d3).

2. Paroi multicouches (100) selon la revendication 1, dans laquelle le troisième angle d'inclinaison de la quatrième direction d'extension longitudinale (d4) par rapport à la première direction d'extension longitudinale (d1) et le quatrième angle d'inclinaison de la quatrième direction d'extension longitudinale (d4) ont sensiblement la même amplitude.

3. Paroi multicouches (100) selon la revendication 1, dans laquelle le troisième angle d'inclinaison de la quatrième direction d'extension longitudinale (d4) par rapport à la première direction d'extension longitudinale (d1) et le quatrième angle d'inclinaison de la quatrième direction d'extension longitudinale (d4) par rapport à la troisième direction d'extension longitudinale (d3) ont des amplitudes différentes.

4. Paroi multicouches (100) selon une des revendications précédentes, comprenant en plus au moins une troisième couche (9) de matériau fibreux positionnée sur au moins ladite deuxième couche (7) de matériau métallique, cette troisième couche (9) de matériau fibreux comprenant un troisième ensemble de fibres (10) ayant une cinquième direction d'extension longitudinale (d5), la cinquième direction d'extension longitudinale (d5) étant inclinée d'un cinquième angle d'inclinaison prédéfini par rapport à la quatrième direction d'extension longitudinale (d4).

5. Paroi multicouches (100) selon la revendication 4, comprenant en plus au moins une quatrième couche (11) de matériau fibreux positionnée sur au moins ladite troisième couche (9) de matériau fibreux, cette quatrième couche (11) de matériau fibreux comprenant un quatrième ensemble de fibres (12) ayant une sixième direction d'extension longitudinale (d6), la sixième direction d'extension longitudinale (d6) étant inclinée d'un sixième angle d'inclinaison prédéfini par rapport à la cinquième direction d'extension longitudinale (d5).

6. Paroi multicouches (100) selon la revendication 5, comprenant en plus au moins une troisième couche (13) de matériau métallique positionnée sur au moins ladite quatrième couche (11) de matériau fibreux, cette troisième couche (13) de matériau métallique comprenant un troisième ensemble de tôles perforées (14) métalliques sensiblement les unes à côté des autres, le troisième ensemble de tôles perforées (14) métalliques ayant une septième direction d'extension longitudinale (d7), la septième direction d'extension longitudinale (d7) étant inclinée d'un septième angle d'inclinaison prédéfini par rapport à la quatrième direction d'extension longitudinale (d4) et d'un huitième angle d'inclinaison prédéfini par rapport à la sixième direction d'extension longitudinale (d6).

7. Paroi multicouches (100) selon la revendication 6, dans laquelle le septième angle d'inclinaison de la septième direction d'extension longitudinale (d7) par rapport à la quatrième direction d'extension longitudinale (d4) et le huitième angle d'inclinaison de la septième direction d'extension longitudinale (d7) par rapport à la sixième direction d'extension longitudinale (d6) ont quasiment la même amplitude.

8. Paroi multicouches (100) selon la revendication 6, dans laquelle le septième angle d'inclinaison de la septième direction d'extension longitudinale (d7) par rapport à la quatrième direction d'extension longitudinale (d4) et le huitième angle d'inclinaison de la septième direction d'extension longitudinale (d7) par rapport à la sixième direction d'extension longitudinale (d6) ont des amplitudes différentes.

9. Paroi multicouches (100) selon la revendication 1, dans laquelle :
- les tôles perforées du premier ensemble (2) sont adjacentes les unes aux autres ;
- les tôles perforées du deuxième ensemble (8) sont adjacentes les unes aux autres.

10. Paroi multicouches (100) selon la revendication 1, dans laquelle :
- les tôles perforées du premier ensemble (2) se chevauchent les unes les autres ;
- les tôles perforées du deuxième ensemble (8) se chevauchent partiellement les unes les autres.

11. Paroi multicouches (100) selon la revendication 6, dans laquelle les tôles perforées du troisième ensemble (14) sont adjacentes les unes aux autres.

12. Paroi multicouches (100) selon la revendication 6, dans laquelle les tôles perforées du troisième ensemble (14) se chevauchent partiellement les unes les autres.

13. Structure multicouches comprenant :
- au moins une première paroi multicouches selon une des revendications précédentes,
- au moins une deuxième paroi multicouches selon une des revendications précédentes,
- un noyau structurel positionné entre ladite au moins première paroi multicouches et ladite au moins deuxième paroi multicouches.

14. Méthode de formation d'une paroi multicouches (100) comprenant les étapes de :
- dépôt d'au moins une première couche (1) de matériau métallique sur un modèle tridimensionnel, ladite au moins première couche (1) de matériau métallique comprenant un premier ensemble de tôles perforées (2) métalliques sensiblement à côté les unes des autres, ayant une première direction d'extension longitudinale (d1) ;
- dépôt, sur ladite au moins première couche (1) de matériau métallique, d'au moins une première couche (3) de matériau fibreux, cette première couche (3) de matériau fibreux comprenant un premier ensemble de fibres (4) ayant une deuxième direction d'extension longitudinale (d2), l'étape de dépôt d'au moins cette première couche (3) de matériau fibreux comprenant une étape d'orientation du premier ensemble de fibres (4) de telle manière que la deuxième direction d'extension longitudinale (d2) soit inclinée d'un premier angle d'inclinaison prédéfini par rapport à la première direction d'extension longitudinale (d1) ;
- dépôt, sur ladite au moins première couche (3) de matériau fibreux, d'au moins une deuxième couche (5) de matériau, cette deuxième couche (5) de matériau fibreux comprenant un deuxième ensemble de fibres (6) ayant une troisième direction d'extension longitudinale (d3), l'étape de dépôt d'au moins cette deuxième couche (5) de matériau fibreux comprenant l'étape d'orientation du deuxième ensemble de fibres (6) de telle manière que la troisième direction d'extension longitudinale (d3) soit inclinée d'un deuxième angle d'inclinaison prédéfini par rapport à la deuxième direction d'extension longitudinale (d2) :
- dépôt, sur ladite au moins deuxième couche (5) de matériau fibreux, d'au moins une deuxième couche (7) de matériau métallique, cette deuxième couche (7) de matériau métallique comprenant un deuxième ensemble de tôles perforées (8) métalliques sensiblement les unes à côté des autres, le deuxième ensemble de tôles perforées (8) métalliques ayant une quatrième direction d'extension longitudinale (d4), l'étape de dépôt d'au moins une deuxième couche (7) de matériau métallique comprenant une étape d'orientation du deuxième ensemble de tôles perforées (8) métalliques de telle manière que la quatrième direction d'extension longitudinale (d4) soit inclinée d'un troisième angle d'inclinaison prédéfini par rapport à la première direction d'extension longitudinale (d1) et d'un quatrième angle d'inclinaison prédéfini par rapport à la troisième direction d'extension longitudinale (d3).

15. Méthode de formation selon la revendication 14, comprenant en outre les étapes de :
- dépôt, sur ladite au moins deuxième couche (7) de matériau métallique, d'au moins une troisième couche (9) de matériau fibreux, cette troisième couche (9) de matériau fibreux comprenant un troisième ensemble de fibres (10) ayant une cinquième direction d'extension longitudinale (d5), l'étape de dépôt d'au moins une troisième couche (9) de matériau fibreux comprenant l'étape d'orientation du troisième ensemble de fibres (10) de telle manière que la cinquième direction d'extension longitudinale (d5) soit inclinée d'un cinquième angle d'inclinaison prédéfini par rapport à la quatrième direction d'extension longitudinale (d4) ;
- dépôt, sur ladite au moins troisième couche (9) de matériau fibreux, d'au moins une quatrième couche (11) de matériau fibreux, cette quatrième couche (11) de matériau fibreux comprenant un quatrième ensemble de fibres (12) ayant une sixième direction d'extension longitudinale (d6), l'étape de dépôt d'au moins une quatrième couche de matériau fibreux (11) comprenant une étape d'orientation du quatrième ensemble de fibres (12) de telle manière que la sixième direction d'extension longitudinale (d6) soit inclinée d'un sixième angle d'inclinaison prédéfini par rapport à la cinquième direction d'extension longitudinale (d5) ;
- dépôt, sur ladite au moins quatrième couche (11) de matériau fibreux, d'au moins une troisième couche (13) de matériau métallique, cette troisième couche (13) de matériau métallique comprenant un troisième ensemble de tôles perforées (14) métalliques sensiblement les unes à côté des autres, le troisième ensemble de tôles perforées (14) métalliques ayant une septième direction d'extension longitudinale (d7), l'étape de dépôt d'au moins une troisième couche (7) de matériau métallique comprenant l'étape d'orientation du troisième ensemble de tôles perforées (14) métalliques de telle manière que la septième direction d'extension longitudinale (d7) soit inclinée d'un septième angle d'inclinaison prédéfini par rapport à la quatrième direction d'extension longitudinale (d4) et d'un huitième angle d'inclinaison prédéfini par rapport à la sixième direction d'extension longitudinale (d6).
